# FASCICULE DE BREVET EUROPEEN

(11) **EP 2 018 323 B1**
(45) Date de publication et mention de la délivrance du brevet: **18.11.2009**
(21) Numéro de dépôt: 07766027.2
(22) Date de dépôt: 10.05.2007
(51) Int. Cl.: B64F 5/00, B23P 6/00

(54) **PROCEDE DE REPARATION D'UNE ZONE ENDOMMAGEE D'UN FUSELAGE D'AERONEF**
VERFAHREN ZUR REPARATUR EINES SCHADHAFTEN BEREICHS EINES FLUGZEUGRUMPFES
METHOD OF REPAIRING A DAMAGED AREA OF AN AIRCRAFT FUSELAGE

(30) Priorité: 19.05.2006 FR 0651838
(43) Date de publication de la demande: 28.01.2009
(73) Titulaire: AIRBUS France, 31060 Toulouse Cédex (FR)
(72) Inventeur: ROUX, Jacques, F-31770 Colomiers (FR); GAUDIN, Chrystèle, F-31500 Toulouse (FR); ROHIC, Pierre-Jean, F-31000 Toulouse (FR); ROSEMBERG, Bruno, F-31000 Toulouse (FR)
(74) Mandataire: Fantin, Laurent
(86) Numéro de dépôt international: PCT/FR2007/051248
(87) Numéro de publication internationale: WO 2007/135318

(56) Documents cités:
- US-A- 2 692 425
- US-A- 4 916 880
- US-A- 5 023 987
- US-A- 5 281 066

## Description

La présente invention se rapporte à un procédé de réparation d'une zone endommagée d'un fuselage d'aéronef.

Le fuselage d'un aéronef comprend une enveloppe externe généralement sous forme de tôle, renforcée par des raidisseurs internes constituant une ossature.

La partie externe du fuselage d'un aéronef peut être endommagée par l'impact d'un oiseau ou d'un autre objet. Si la trace de l'impact est trop importante, cela peut engendrer des perturbations et nuire aux écoulements d'air autour du fuselage, si bien qu'il peut être nécessaire de changer la partie du fuselage impactée.

D'après le manuel de réparation structurale (S.R.M. : structural repair manual), paragraphe 51-27-00, la réparation doit être effectuée en découpant la tôle.

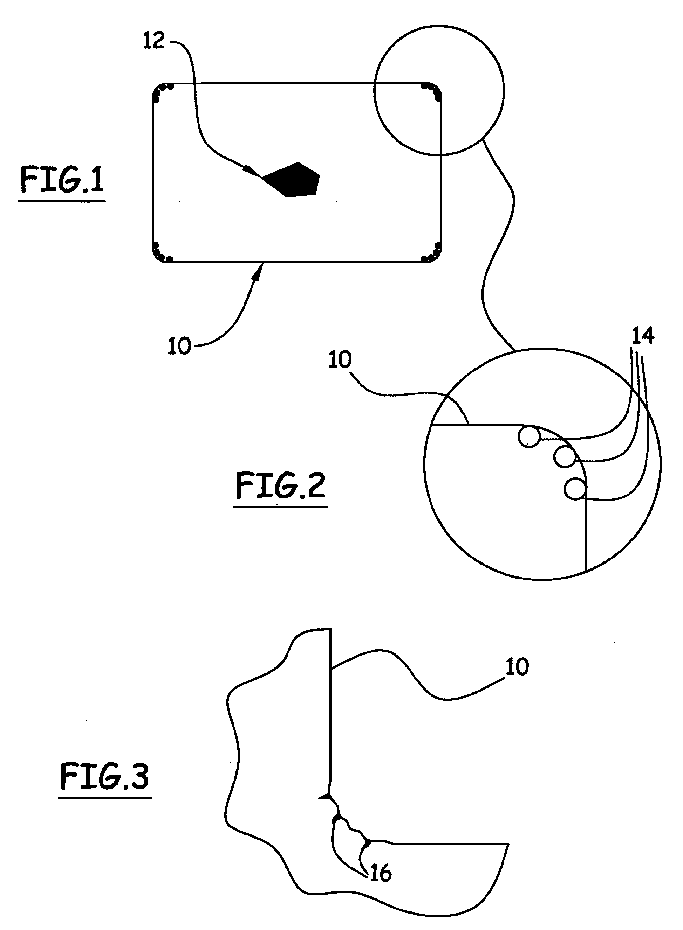

Comme illustré sur la figure 1, une découpe 10 en forme de polygone englobant l'impact 12 est réalisée au niveau de la tôle. Généralement, la découpe 10 est carrée ou rectangulaire.

Pour limiter la concentration des contraintes, les angles de la découpe 10 sont arrondis.

Pour réaliser cette découpe, et plus particulièrement les angles arrondis, l'opérateur chargé de la réparation perce à l'aide d'une perceuse des petits trous 14, par exemple d'un diamètre de l'ordre de 6 mm, disposés à l'intérieur de la découpe, dont la circonférence est sensiblement tangente à la découpe à réaliser. En suivant, l'opérateur relie ces petits trous 14 à l'aide d'une lime et parachève l'arrondi avec ce même outil.

Ces opérations de découpage à main levée doivent être faites avec beaucoup de minutie pour essayer de limiter les défauts de découpage. Par conséquent, elles sont relativement longues et coûteuses, et engendrent des temps d'immobilisation conséquents qui nuisent à la rentabilité de l'aéronef.

Toutefois, même si ces opérations sont faites avec la plus grande minutie, l'utilisation de la lime génère des défauts de découpage, par exemple en raison de déviations de trajectoire ou de l'action ponctuelle de la lime.

Les arrondis étant des zones de contraintes maximales, ces défauts de découpage sont générateurs de criques 16, comme illustré sur la figure 3.

Ces défauts de réparation sont pris en compte par des calculs de tolérance aux dommages, qui prévoient suite à ce type de réparation une augmentation de la fréquence des visites de contrôle. L'augmentation du nombre de visites conduit à immobiliser plus souvent l'aéronef et à réduire son temps d'exploitation.

Suite à ce type de réparation, si une crique est détectée lors d'une visite de contrôle, une nouvelle réparation est obligatoire. La nouvelle découpe sur le fuselage a une dimension englobant la crique et l'ancienne réparation. Par conséquent, au fur et à mesure des réparations successives, la surface délimitée par la découpe augmente, ce qui se traduit à terme par une réduction de la durée de vie de l'aéronef.

Aussi, ce procédé de réparation n'est pas satisfaisant car il est long à mettre en oeuvre, augmente le risque d'apparition de nouveaux défauts et la fréquence des visites de contrôle ce qui se traduit par une diminution du temps d'exploitation de l'aéronef et généralement par une réduction de sa durée de vie.

Aussi, la présente invention vise à pallier les inconvénients de l'art antérieur en proposant un procédé de découpe d'une zone endommagée d'un fuselage, notamment par un impact, susceptible de réduire le temps d'intervention et les risques de dommages ultérieurs, tel que par exemple l'apparition de nouvelles criques, et permettant d'augmenter la disponibilité de l'aéronef et sa durée de vie.

A cet effet, l'invention a pour objet un procédé de découpe d'une zone endommagée d'un fuselage d'aéronef, notamment afin de réparer ladite zone endommagée, consistant à réaliser au moins une découpe dans le fuselage afin de délimiter une zone découpée englobant la zone endommagée et comportant au moins un arrondi, caractérisé en ce qu'il consiste à réaliser un orifice au niveau dudit arrondi de la zone découpée avec un outil dont le diamètre correspond à celui de l'arrondi souhaité.

D'autres caractéristiques et avantages ressortiront de la description qui va suivre de l'invention, description donnée à titre d'exemple uniquement, en regard des dessins annexés sur lesquels :
- la figure 1 est une vue en élévation d'une zone d'un fuselage endommagée par un impact illustrant la découpe selon l'art antérieur,
- la figure 2 est une vue illustrant en détails un arrondi de la découpe selon l'art antérieur,
- la figure 3 est une vue illustrant l'arrondi d'une découpe selon l'art antérieur avec des criques,
- la figure 4 est une vue en élévation d'une zone d'un fuselage endommagée par un impact illustrant en trait fort les découpes selon l'invention et en trait mixte la découpe selon l'art antérieur,
- la figure 5 est une vue en élévation de la zone du fuselage après les découpes selon l'invention, et
- la figure 6 est une coupe illustrant la zone du fuselage réparée.

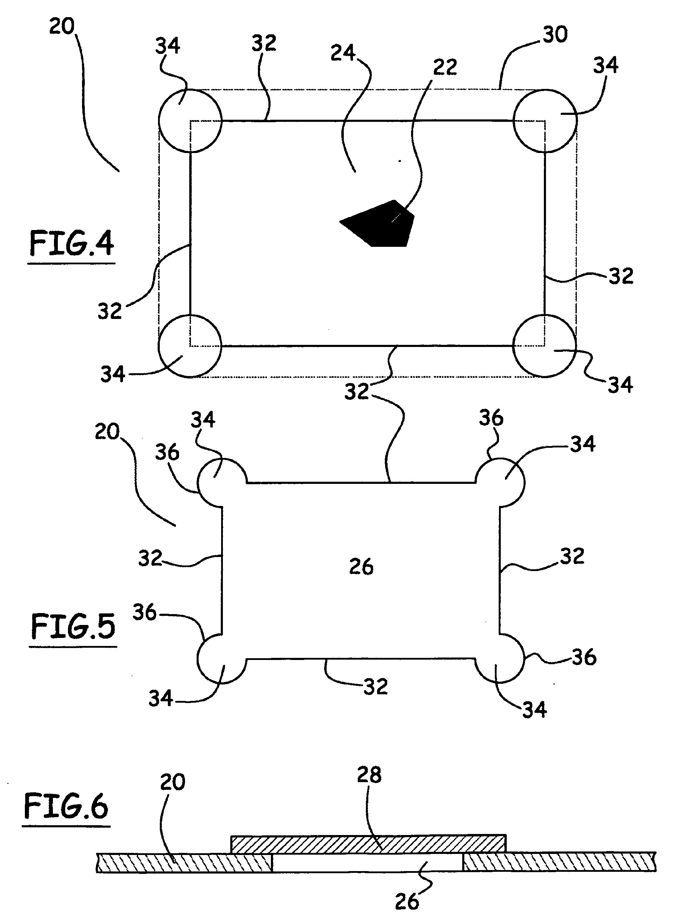

Sur la figure 4, on a représenté en 20 une zone d'un fuselage d'aéronef endommagée par un impact 22.

Pour la suite de la description, on entend par fuselage, par extension, toutes parties de l'enveloppe externe d'un aéronef susceptibles d'être en contact avec les écoulements d'air, englobant aussi bien le corps de l'avion, que les ailes et l'empennage.

Par impact, on entend tout défaut sur la surface extérieure du fuselage, notamment un enfoncement de ladite surface en raison notamment d'un choc avec un oiseau ou tout autre élément, susceptible de générer des perturbations au niveau des écoulements d'air.

Le procédé de réparation de la zone du fuselage 20 endommagée consiste à réaliser au moins une découpe dans le fuselage 20 afin de délimiter une zone découpée 24 englobant l'impact 22 et à obtenir une ouverture 26 dans le fuselage puis à obturer ladite ouverture avec une portion de tôle 28 compatible avec le reste du fuselage 20 dont les dimensions sont égales ou supérieures à celle de l'ouverture 26.

Afin de limiter les concentrations de contraintes, la zone découpée 24 comprend au moins un arrondi.

La portion de tôle 28 rapportée est solidarisée par tous moyens appropriés au reste du fuselage, notamment par rivetage, soudage ou autre.

La découpe de la portion de tôle rapportée 28 ainsi que sa fixation sur le reste du fuselage ne sont pas plus détaillées car elles sont connues par l'homme du métier. De préférence, pour ces étapes, on appliquera les solutions préconisées par le manuel de réparation structurale.

Sur la figure 4, on a représenté en trait mixte une découpe 30 selon l'art antérieur.

La zone découpée 24 a une forme polygonale avec des côtés 32 sensiblement rectilignes. En variante, les côtés 32 pourraient être légèrement courbes. Généralement, la zone découpée 24 est rectangulaire ou carrée et comprend quatre côtés 32.

Selon l'invention, la zone découpée 24 comprend au niveau de chaque angle un orifice 34 réalisé avec un outil dont le diamètre correspond à celui de l'arrondi souhaité.

Le procédé de découpe selon l'invention consiste à réaliser un orifice 34 au niveau de chaque angle de la zone à découper 24 avec un outil dont le diamètre correspond à celui de l'arrondi souhaité, à l'aide notamment d'une perceuse dotée d'un gros foret ou d'une cloche, puis à relier lesdits orifices 34 par une découpe correspondant aux côtés 32 à l'aide d'une scie.

L'arrondi au niveau de chaque angle étant obtenu par le perçage d'un seul orifice dont le diamètre correspond à celui de l'arrondi, l'état de surface du chant de l'arrondi est de meilleure qualité que celui de l'arrondi de l'art antérieur réalisé manuellement par des trous successifs reliés entre eux.

De plus, le fait de réaliser les orifices à l'aide d'un outil tournant permet d'améliorer l'état de surface du chant des orifices.

L'arrondi étant de meilleure qualité les risques d'apparition de défauts tels que des criques sont réduits.

Avantageusement, par sécurité, il est possible d'opérer au niveau des orifices 34 un ré-alésage de quelques microns pour améliorer la qualité de surface du chant des orifices 34 afin de réduire les risques d'apparition de défauts.

Ainsi, selon l'invention, la mise en oeuvre du procédé de découpe est plus rapide ce qui permet de réduire le temps d'intervention et d'améliorer la disponibilité de l'aéronef.

La réduction des risques d'apparition des défauts permet d'éviter l'augmentation de fréquence des visites de contrôle et les réparations ultérieures ce qui permet également d'améliorer la disponibilité de l'aéronef et sa longévité.

Pour s'assurer que les orifices 34 ne comportent pas de dommage, on peut les contrôler par des tests non destructifs, par exemple de type HFEC (high frequency eddy current).

Le diamètre des orifices 34 doit être suffisant pour permettre l'introduction d'une lame d'une scie, par exemple de l'ordre de 20 mm.

Selon une autre caractéristique de l'invention, les côtés 32 de la zone découpée 24 ne sont pas tangents aux arrondis prévus au niveau des angles du polygone comme pour l'art antérieur, mais sécants.

Par conséquent, même s'il existe une petite déviation de trajectoire de la scie entre deux orifices, celle-ci ne remet pas en cause la qualité de l'arrondi, la scie n'atteignant jamais la zone de l'arrondi soumise aux contraintes maximales.

Par ailleurs, le fait de prévoir des côtés 32 sécants aux orifices 34 permet d'obtenir un arc courbe 36 au niveau des angles plus long que celui de l'art antérieur contribuant à une meilleure répartition des contraintes et de limiter les phénomènes de concentration de contraintes en un point susceptibles d'engendrer l'apparition de criques.

Avantageusement, les côtés 32 sont disposés par rapport aux orifices 34 de manière à délimiter un arc courbe 36 au niveau desdits orifices s'étendant approximativement sur 270°.

## Revendications

1. Procédé de découpe d'une zone endommagée d'un fuselage d'aéronef, notamment afin de réparer ladite zone endommagée, consistant à réaliser au moins une découpe dans le fuselage (20) afin de délimiter une zone découpée (24) englobant la zone endommagée et comportant au moins un arrondi, **caractérisé en ce qu'**il consiste à réaliser un orifice (34) au niveau dudit arrondi de la zone découpée (24) avec un outil dont le diamètre correspond à celui de l'arrondi souhaité.

2. Procédé de découpe d'une zone endommagée d'un fuselage selon la revendication 1, **caractérisé en ce que** la zone découpée (24) a une forme polygonale avec des côtés (32) et au niveau de chaque angle un orifice (34) dont le diamètre correspond à celui de l'arrondi souhaité.

3. Procédé de découpe d'une zone endommagée d'un fuselage d'un aéronef selon la revendication 2, **caractérisé en ce qu'**il consiste à opérer au niveau des orifices (34) un ré-alésage de quelques microns pour améliorer la qualité de surface du chant des orifices (34).

4. Procédé de découpe d'une zone endommagée d'un fuselage d'un aéronef selon la revendication 2 ou 3, **caractérisé en ce que** les côtés (32) de la zone découpée (24) et les orifices (34) sont sécants.

5. Procédé de découpe d'une zone endommagée d'un fuselage d'un aéronef selon la revendication 4, **caractérisé en ce que** les côtés (32) sont disposés par rapport aux orifices (34) de manière à délimiter un arc courbe (36) au niveau desdits orifices s'étendant approximativement sur 270°.

6. Procédé de réparation d'une zone endommagée d'un fuselage d'un aéronef consistant à réaliser au moins une découpe dans le fuselage (20) selon l'une quelconque des revendications précédentes, puis à obturer l'ouverture correspondant à la zone découpée (24) avec un élément (28) compatible avec le reste du fuselage (20).

7. Aéronef réparé en mettant en oeuvre le procédé de réparation selon la revendication 6.

## Claims

1. Process for cutting out a damaged area of an aircraft fuselage, in particular so as to repair said damaged area, consisting in making at least one cut-out in the fuselage (20) so as to delimit a cut-out area (24) that encompasses the damaged area and that comprises at least one flare-out, **characterized in that** it consists in making a hole (34) at said flare-out of the cut-out area (24) with a tool whose diameter corresponds to that of the desired flare-out.

2. Process for cutting out a damaged area of a fuselage according to claim 1, wherein the cut-out area (24) has a polygonal shape with sides (32) and - at the level of each angle - a hole (34) whose diameter corresponds to that of the desired flare-out.

3. Process for cutting out a damaged area of a fuselage of an aircraft according to claim 2, wherein it consists in re-drilling for several microns at holes (34) to improve the surface quality of the edge of the holes (34).

4. Process for cutting out a damaged area of a fuselage of an aircraft according to claim 2 or 3, wherein the sides (32) of the cut-out area (24) and the holes (34) are crosscut.

5. Process for cutting out a damaged area from a fuselage of an aircraft according to claim 4, wherein the sides (32) are arranged relative to the holes (34) so as to delimit a curved arc (36) at said holes extending approximately over 270°.

6. Process for repairing a damaged area of a fuselage of an aircraft that consists in making at least one cut-out in the fuselage (20) according to any of the preceding claims, then in blocking the opening that corresponds to the cut-out area (24) with an element (28) that is compatible with the remainder of the fuselage (20).

7. Aircraft that has been repaired by using the process for repair work according to claim 6.

## Patentansprüche

1. Verfahren zum Ausschneiden eines beschädigten Bereichs eines Rumpfes eines Luftfahrzeugs, insbesondere zum Reparieren des beschädigten Bereichs, wobei dieses Verfahren darin besteht, in den Rumpf (20) mindestens eine Aussparung einzubringen, um einen ausgeschnittenen Bereich (24) zu begrenzen, der den beschädigten Bereich umfasst und mindestens einen abgerundeten Abschnitt aufweist, **dadurch gekennzeichnet, dass** es darin besteht, im Bereich des abgerundeten Abschnitts des ausgeschnittenen Bereichs (24) mit einem Werkzeug eine Öffnung (34) einzubringen, wobei der Durchmesser des Werkzeugs dem Durchmesser des gewünschten abgerundeten Abschnitts entspricht.

2. Verfahren zum Ausschneiden eines beschädigten Bereichs eines Rumpfes nach Anspruch 1, **dadurch gekennzeichnet, dass** der ausgeschnittene Bereich (24) eine polygonale Form mit Seiten (32) aufweist, die im Bereich eines jeden Ecks eine Öffnung (34) umfasst, deren Durchmesser dem des gewünschten abgerundeten Abschnitts entspricht.

3. Verfahren zum Ausschneiden eines beschädigten Bereichs eines Rumpfes eines Luftfahrzeuges nach Anspruch 2, **dadurch gekennzeichnet, dass** es darin besteht, im Bereich der Öffnungen (34) zur Verbesserung der Oberflächenqualität der Schmalseite der Öffnungen (34) eine Nachbohrung von ein paar Mikrometern vorzunehmen.

4. Verfahren zum Ausschneiden eines beschädigten Bereichs eines Rumpfes eines Luftfahrzeuges nach Anspruch 2 oder 3, **dadurch gekennzeichnet, dass** die Seiten (32) des ausgeschnittenen Bereichs (24) und die Öffnungen (34) einander schneiden,

5. Verfahren zum Ausschneiden eines beschädigten Bereichs eines Rumpfes eines Luftfahrzeuges nach Anspruch 4, **dadurch gekennzeichnet, dass** die Seiten (32) im Verhältnis zu den Öffnungen (34) derart angeordnet sind, dass eine gebogene Krümmung (36) im Bereich der Öffnungen begrenzt wird, die sich über etwa 270° erstreckt.

6. Verfahren zum Reparieren eines beschädigten Bereichs eines Rumpfes eines Luftfahrzeuges, das darin besteht, in den Rumpf (20) mindestens eine Aussparung nach einem der vorstehenden Ansprüche einzubringen, dann die dem ausgeschnittenen Bereich (24) entsprechende Öffnung mit einem Element (28) zu verschließen, das mit dem Rest des Rumpfes (20) kompatibel ist.

7. Luftfahrzeug, das unter Durchführung des Reparaturverfahrens nach Anspruch 6 repariert wurde.
